# EUROPÄISCHE PATENTSCHRIFT

(11) **EP 2 874 526 B1**
(45) Veröffentlichungstag und Bekanntmachung des Hinweises auf die Patenterteilung: **06.09.2017**
(21) Anmeldenummer: 13737585.3
(22) Anmeldetag: 10.07.2013
(51) Int. Cl.: A47J 43/00, A47J 43/07, A47J 44/00, A47J 44/02

(54) **KÜCHENMASCHINE**
KITCHEN MACHINE
MACHINE POUR LA CUISINE

(30) Priorität: 23.07.2012 DE 102012106642; 26.06.2013 DE 102013106691
(43) Veröffentlichungstag der Anmeldung: 27.05.2015
(73) Patentinhaber: Vorwerk & Co. Interholding GmbH, 42275 Wuppertal (DE)
(72) Erfinder: KOETZ, Hendrik, 45138 Essen (DE); GREIVE, Volker, 42277 Wuppertal (DE); LANG, Torsten, 42657 Solingen (DE); CORNELIßEN, Markus, 42799 Leichlingen (DE); JOSE RESENDE, Maria, CH-8832 Wollerau (CH); HILGERS, Stefan, 45357 Essen (DE)
(74) Vertreter: Müller, Enno
(86) Internationale Anmeldenummer: PCT/EP2013/064549
(87) Internationale Veröffentlichungsnummer: WO 2014/016117

(56) Entgegenhaltungen:
- EP-A2- 2 394 549
- DE-A1-102010 016 090
- DE-A1-102010 037 769

## Beschreibung

Die Erfindung betrifft zunächst eine elektromotorisch betriebene Küchenmaschine mit einem aufheizbaren, zur Aufnahme eines Rührwerks ausgebildeten Rührgefäß, wobei die Küchenmaschine zum selbsttätigen Zubereiten einer Speise entsprechend einem vorgegebenen Abarbeitungsprogramm ausgebildet ist.

Die Erfindung betrifft des weiteren ein Verfahren zum selbsttätigen Zubereiten einer Speise in einer elektromotorisch betriebenen Küchenmaschine mit einem aufheizbaren, zur Aufnahme eines Rührwerks ausgebildeten Rührgefäß.

Derartige Küchenmaschinen sind bereits in vielfältiger Hinsicht bekannt. Es wird beispielsweise auf die DE 102007059236 A1 verwiesen, darüber hinaus beispielsweise auf die EP 757530 B1, betreffend ein besonderes Zubereiten einer Speise, wie es auch vorliegend Anwendung finden kann, ferner auf die EP 1274333 B1, die insbesondere eine Heizeinrichtung für ein Rührgefäß einer derartigen Küchenmaschine beschreibt. Weitere Stand der Technik Dokumente sind bspw.: DE102010307769, DE102010016090, EP2394549. Derartige Küchenmaschinen sind auch bereits dahingehend bekannt geworden, dass sie eine selbsttätige, programmierte Zubereitung einer Speise ermöglichen, insbesondere eine selbsttätige, automatische Abarbeitung eines Rezeptes ermöglichen. Die Abarbeitung kann, wie im Rahmen der Anmeldung auch bevorzugt, durch das sukzessive Abarbeiten von Rezeptschritten, aus welchen sich das Rezept zusammensetzt, erfolgen. Hierbei kann weiter, wie auch bevorzugt, einer, mehrere oder alle Rezeptschritte die ausdrückliche Freigabe oder ein Startsignal eines Benutzers zur Abarbeitung erfordern. Im Rahmen einer solchen Abarbeitung kann programmgesteuert ein Zubereitungsparameter, wie insbesondere eine Temperatur, die in dem Rührgefäß, beispielsweise einem Rührgefäßboden, erreicht wird und/ oder eine Rührwerksdrehzahl, mit welcher ein in dem Rührgefäß befindliches Rührwerk angetrieben wird, selbsttätig gesteuert oder geregelt werden.

In dieser Hinsicht ist insbesondere auch auf die WO 2011/069833 A1 zu verweisen. Die genannten Merkmale können auch als Merkmale der hier beschriebenen Erfindung Bedeutung haben.

Bei der selbsttätigen Durchführung einer Zubereitung einer zum menschlichen Verzehr geeigneten und bestimmten Speise, beispielsweise der Abarbeitung eines diesbezüglichen Rezeptes oder eines Rezeptschrittes, stellt sich mitunter heraus, dass trotz einer Vorgabe von Zubereitungsparametern wie einer Menge an Zubereitungsgut, die einzugeben ist und/ oder einer Aufheiztemperatur des Rührgefäßes und/ oder hinsichtlich einer an einem Rühr- oder Mahlwerk einzustellenden Drehzahl, gleichwohl nicht die gewünschten, insbesondere (wiederholt) gleichen Ergebnisse erzielt werden, wie sie labormäßig, etwa bei Erstellen des Rezeptes, erreicht wurden.

Davon ausgehend beschäftigt sich die Erfindung mit der Aufgabenstellung, eine elektromotorisch betriebene Küchenmaschine und ein Verfahren zum selbsttätigen Zubereiten einer Speise anzugeben, die beziehungsweise das ein möglichst gutes Gelingen der Zubereitung im Hinblick auf die Eigenschaften beziehungsweise Qualität der zubereiteten Speise ermöglichen.

Eine mögliche Lösung der Aufgabe hinsichtlich der Küchenmaschine ist nach einem ersten Erfindungsgedanken bei einer Küchenmaschine gegeben, die derart eingerichtet ist, dass ein in das Rührgefäß eingegebenes Zubereitungsgut hinsichtlich seines Zustandes durch in oder an der Küchenmaschine vorgesehene Sensoren oder benutzerseitig durch ein gesondertes Messinstrument ermittelt im Hinblick auf eine Feuchte als Zustandsparameter messbar ist, oder dass ein entsprechender Wert eingebbar ist oder dass ein Geräte- und/ oder Umgebungszustand im Hinblick auf Zustandsparameter, wie Rührgefäßtemperatur und/oder Luftfeuchte, messbar ist, oder ein entsprechender Wert zur programmmäßigen Verarbeitung eingebbar ist, dass ein hierbei erhaltener Messwert oder eingegebener Wert mit einem in dem Abarbeitungsprogramm berücksichtigten Ausgangswert vergleichbar ist und dass eine Abweichung zu dem Ausgangswert durch eine selbsttätige oder vorgeschlagene Anpassung von in dem Abarbeitungsprogramm enthaltenen Zubereitungsparametern, wie Heizzeit und/ oder Heiztemperatur berücksichtigbar sind. Die Rührgefäßtemperatur kann sich insbesondere auf eine anfängliche Rührgefäßtemperatur beziehen. Hiermit kann Berücksichtigung finden, ob das Rührgefäß beispielsweise weil es kurz vorher einer Spülmaschine oder einem Kühlschrank wurde, eine von der in einem Rezept gewöhnlich unterstellten Rührgefäßtemperatur abweichende Rührgefäßtemperatur aufweist.

Die Küchenmaschine weist eine Ausgestaltung auf, welche unter Berücksichtigung von Messwerten oder eingegebenen Werten der Küchenmaschine und/ oder der Umgebung, in welcher die Küchenmaschine betrieben wird, eine Anpassung eines oder mehrerer vorgegebener Zubereitungsparameter, wie beispielsweise die Höhe der Drehzahl, die Dauer eines Rührwerksbetriebes, die Aufheiztemperatur des Rührgefäßes und/ oder ein Aufheizgradient des Rührgefäßes, ermöglicht. Hierbei kann vorgesehen sein, dass diese Anpassung selbsttätig erfolgt, ohne dass der Benutzer einzugreifen hat und gegebenenfalls auch ohne dass eine entsprechende Mitteilung an den Benutzer erfolgt. Es kann aber auch vorgesehen sein, dass diese Eingabe und Verarbeitung der Werte zu einer entsprechenden Anzeige führt und/ oder dem Benutzer aufgegeben wird, zu entscheiden, ob eine Berücksichtigung bei der weiteren Abarbeitung im genannten Sinne erfolgen soll. Das Abarbeitungsprogramm, beispielsweise ein Rezept oder diesbezüglich ein einzelner Rezeptschritt, enthält hierbei in geeigneter Weise eine beispielsweise formelmäßig vorgegebene Abhängigkeit eines solchen Zubereitungsparameters von dem Zustandsparameter. Es kann auch ein tabellarischer Zusammenhang hinterlegt sein, etwa wenn ein formelmäßiger Zusammenhang nicht bekannt ist oder nicht möglich ist. Die Werte der Tabelle können beispielsweise empirisch ermittelt sein.

Gerade bei Speisen, die ein Zubereitungsgut wie Eier und/ oder Mehl und/ oder Milch enthalten oder betreffen, können vergleichsweise geringfügig empfundene Unterschiede zu den in einem Abarbeitungsprogramm zugrunde gelegten Werten, wie einer Temperatur des Rührgefäßes, in welches das Zubereitungsgut eingegeben wird, oder ein herrschender Luftdruck oder eine herrschende Luftfeuchte einen entscheidenden Einfluss auf das Gelingen der Zubereitung haben. Die Luftfeuchte kann in weiterer Einzelheit eine solche sein, die innerhalb des Rührgefäßes gemessen ist, oder außerhalb des Rührgefäßes, aber an der Küchenmaschine selbst oder in, bevorzugt unmittelbarer, Nachbarschaft hierzu. Die Nachbarschaft kann sich auf einen häuslichen Bereich, in welchem die Küchenmaschine genutzt wird, beziehen, sie kann sich auch auf eine Stadt oder eine Region, in welcher die Küchenmaschine benutzt wird, beziehen. Insofern kann es sich ersichtlich um eigene Messwerte, der Küchenmaschine oder eines Hausbewohners, beispielsweise mit einem separaten Feuchtemesser, handeln, wie aber auch um über Institutionen wie Wetterwarten abgefragte oder übermittelte Werte handeln. Es kann sich hinsichtlich beispielsweise der Luftfeuchtigkeit, aber auch etwa hinsichtlich eines Luftdrucks, auch um Werte handeln, die per Funk oder in sonstiger Weise an die Küchenmaschine übertragen werden oder auf entsprechende Anfrage von einem Benutzer als Werte eingegeben werden.

Die in dem Abarbeitungsprogramm für die dort gegebene Festlegung von Zubereitungsparametern zugrundegelegten entsprechenden Werte der Temperatur etc. können fest voreingestellt sein. Sie können aber auch beispielsweise vom Anwender beeinflussbar vorgesehen sein. Hierzu kann auch eine Abfrage an den Anwender erfolgen, etwa hinsichtlich der aktuellen Luftfeuchte oder der aktuellen Lufttemperatur.

Weiter können in dem Rezept, das abzuarbeiten ist, auch Mengenwerte vom Anwender beeinflussbar vorgesehen sein, etwa wenn das Rezept für eine Menge für zwei Personen ausgelegt ist, aber tatsächlich eine Menge für vier Personen zubereitet werden soll, kann vorgesehen sein, dass der Anwender den Sollwert unmittelbar ändert oder im Hinblick auf die bestimmte Personenzahl eine andere Anzahl eingibt, welche dann programmmäßig im Hinblick auf so zugrundezulegende neue Ausgangswerte umgerechnet wird. Auch hierzu kann programmtechnisch eine Tabelle vorgegeben sein, da derartige Umrechnungen nicht immer formelmäßig erfassbar sind.

Im Weiteren kann aber auch vorgesehen sein, dass eine solche Tabelle vom Anwender beeinflussbar ist, etwa falls der Anwender eigene Erfahrungswerte berücksichtigen will. Wie schon angemerkt, sind auch die genannten Mengenangaben als Zubereitungsparameter bevorzugt, weiter bevorzugt selbsttätig, änderbar in dem Abarbeitungsprogramm vorgesehen. Und zwar insbesondere selbsttätig änderbar im Hinblick auf bei der Erstellung des Abarbeitungsprogramms zugrunde gelegter anderer Zustandsparameter.

Das Abarbeitungsprogramm, betreffend gegebenenfalls auch (nur) einen Rezeptschritt, kann, gegebenenfalls unter anderem, darin bestehen, dass eine mit einer vorbestimmten ersten Drehzahl erfolgende Einwirkung auf ein Zubereitungsgut erfolgt, wobei diese erste Drehzahl von der Küchenmaschine durch Messung und gegebenenfalls Korrektur der tatsächlich gegebenen Drehzahl selbsttätig einhaltbar ist. Das elektronische Motormanagement der Küchenmaschine kann also eine selbsttätige Regelung oder Steuerung auf die vorbestimmte erste Drehzahl durchführen bzw. erreichen lassen. Weiter kann das Abarbeitungsprogramm in diesem Zusammenhang enthalten, dass die genannte vorbestimmte erste Drehzahl auf eine vorbestimmte zweite Drehzahl zu ändern ist, vorzugsweise abzusenken ist, wobei die zweite Drehzahl durch die Küchenmaschine nicht selbsttätig eingehalten wird. Dies bedeutet, dass die tatsächliche zweite Drehzahl höher oder niedriger liegen kann als die vorbestimmte zweite Drehzahl. Gleichwohl kann aber die tatsächliche zweite Drehzahl durch einen Sensor, etwa durch einen Drehzahlmesser wie eine Lichtschranke oder mittels eines Hallsensors, hinreichend bestimmbar sein. Es kann entsprechend auch bezüglich der tatsächlichen zweiten Drehzahl ein Vergleich durch die Küchenmaschine selbst vorgenommen werden, ob sie der vorbestimmten Drehzahl entspricht oder in welchem Maß sie hiervon abweicht. Dieses Maß der Abweichung, das hinsichtlich der Drehzahl bevorzugt als Absolutmaß also etwa fünf Umdrehungen pro Minute Unterschied zu der vorbestimmten Drehzahl, gegeben sein kann, kann nun zur Auswertung herangezogen werden. Nämlich als Maß für die Viskosität des Zubereitungsgutes.

Insbesondere ist bevorzugt, dass im Rahmen des genannten Abarbeitungsprogramms ein mehrfacher Wechsel zwischen der vorbestimmten ersten und vorbestimmten zweiten Drehzahl erfolgt. Gegebenenfalls kann auch ein Wechsel zwischen mehr als 2, beispielsweise 3 oder mehr vorbestimmten Drehzahlen, erfolgen. Wenn ein Wechsel zwischen mehreren vorbestimmten Drehzahlen erfolgt, ist jedenfalls bezüglich einer von der ersten vorbestimmten Drehzahl abweichenden zweiten vorbestimmten Drehzahl vorgesehen, dass die genannte selbsttätige Einhaltung dieser tatsächlichen zweiten Drehzahl nicht durch die Küchenmaschine vorgenommen wird. Eine sich dann gegebenenfalls einstellende Abweichung zu der vorbestimmten zweiten Drehzahl ist in dem beschriebenen Sinne auswertbar und zum Rückschluss auf den Zustand des Zubereitungsgutes nutzbar. Zufolge des mehrfachen Wechsels kann auch, unter Berücksichtigung der Zeitachse, ein Gradient der Abweichung bestimmt werden. Der Gradient kann beispielsweise im Hinblick auf eine Vorausberechnung genutzt werden.

Darüber hinaus ist bevorzugt, dass das genannte Abarbeitungsprogramm eine Vielzahl von Wechseln, bevorzugt eine zunächst grundsätzlich über einen so langen Zeitraum vorgesehene Vielzahl von Wechseln zwischen einer mindestens ersten und mindestens zweiten vorbestimmten Drehzahl beinhaltet, dass der für dieses Abarbeitungsprogramm bzw. diesen Teil des Abarbeitungsprogramms (Wechsel zwischen zwei oder mehr vorbestimmten Drehzahlen) vorbestimmte Zeitraum nicht auszuschöpfen ist um den durch die betreffende Zubereitung gewünschten Endzustand des Zubereitungsgutes zu erreichen.

Weiter bevorzugt ist ein solches Abarbeitungsprogramm insbesondere für die Zubereitung von Sahne bevorzugt. Ausgehend von zunächst flüssigem Zustand, also praktisch dem Zustand, wie sie übliche Milch bietet, kann beginnend mit einer konstanten, gleichsam nullten vorbestimmten Drehzahl, über einen ersten vorgegebenen Zeitraum beispielsweise, auf dieses Zubereitungsgut einwirkbar sein. Nach Ablauf einer vorgegebenen Zeitspanne, nach welcher üblicherweise frühestens eine erste signifikante Änderung (Anstieg) der Viskosität zu erwarten ist, kann dann ein Wechsel zwischen einer vorbestimmten ersten hohen Drehzahl und einer vorbestimmten zweiten niedrigen Drehzahl programmgemäß eintreten. Die vorbestimmte hohe Drehzahl kann beispielsweise im Bereich von 200 bis 600 U/min, weiter bevorzugt zwischen 300 und 500 oder etwa bei 400 U/min angesiedelt sein, während die zweite, niedrige Drehzahl im Bereich von 10 bis 70 U/min, weiter bevorzugt zwischen 20 und 60 U/min und darüber hinaus bevorzugt bei 40 U/min angesiedelt sein kann.

Im Hinblick auf empirisch niedergelegte Zielwerte, die beispielsweise bei der Einstellung der zweiten Drehzahl auf 40 U/ min dahingehend gegeben sein können, dass bei Erreichen einer zweiten tatsächlichen Drehzahl von 35 U/min die gewünschte Viskosität der Sahne gegeben ist, kann entsprechend vorstehendem Ablauf verfahren werden. Wird der Zielwert der zweiten Drehzahl (noch) nicht erreicht, kann nach Ablauf einer vorgegebenen weiteren (zweiten) Zeitspanne, in welcher das Küchengerät mit dieser niedrigeren Drehzahl betrieben wird, auf die genannte Ausgangsdrehzahl (nullte Drehzahl) zurückgeschaltet werden. Hierbei kann aber die vorgegebene Zeitspanne für diese Ausgangsdrehzahl abweichend, insbesondere kleiner sein als bei dem ersten Betrieb mit dieser Ausgangsdrehzahl.

Bei Erreichen einer tatsächlichen zweiten Drehzahl von oder unterhalb der vorgegebenen Grenzdrehzahl von beispielsweise 35 U/min ist dadurch auf ein Erreichen der gewünschten Viskosität zurückschließbar und kann das Abarbeitungsprogramm selbsttätig zu diesem Zeitpunkt abbrechen. Dieses Abbrechen bedeutet, dass das Rührwerk abgeschaltet wird, also kein aktives Rühren mehr vorgenommen wird.

Sollte es sich um ein anderes Zubereitungsgut als (zielmäßig) Sahne handeln, wie etwa eine bestimmte Soße, bei welcher gegebenenfalls gewünscht ist, dass sie gleichwohl noch nach zufolge von Rührwerksbeaufschlagung erreichter vorbestimmter Viskosität auf einer bestimmten Temperatur gehalten wird oder die Temperatur nur langsam zurückgenommen wird, kann die Beendigung des Abarbeitungsprogramms insoweit auch nur auf die Rührwerksaktivität (Drehzahl) beschränkt sein, die Heizaktivität aber noch entsprechend weitergeführt werden.

Die Beendigung der Rührwerksaktivität kann auch bedeuten, dass zwar, gegebenenfalls auch in größeren Zeitabständen, noch eine Betätigung des Rührwerks erfolgt, aber nur in einem solchen Ausmaß, dass praktisch keine Auswirkung auf eine Viskositätsänderung des Zubereitungsgutes mehr zu erwarten ist bzw. sich einstellt, da beispielsweise einem Anbrennen vorzubeugen ist.

Ein Abarbeitungsprogramm kann auch, wobei auch hier das vorgenannte Beispiel einer Soße herangezogen werden kann, weiter vorzugsweise auf eine Zubereitung von Marmelade bezogen sein. In diesem Zusammenhang, aber auch hiervon losgelöst, kann ein Zustandsparameter auch in einem Gewicht des Zubereitungsgutes gegeben sein. Da es bei den genannten Beispielsfällen und bei sonstigem Zubereitungsgut gewünscht sein kann, dass dieses, beispielsweise durch Verdampfung, einen Teil seiner Menge verliert, etwa wenn hierdurch ein gewünschtes Eindicken erreicht werden kann, ergibt das Gewicht einen Anhalt dafür, wie weit dieser gewünschte Prozess fortgeschritten ist.

Insofern kann das Abarbeitungsprogramm vorsehen, dass ein in das Rührgefäß eingegebenes Zubereitungsgut hinsichtlich seines Zustandsparameters Gewicht fortlaufend bzw. in bestimmten zeitlichen Abständen prüfbar ist bzw. geprüft wird und dass in Abhängigkeit eines Erreichen eines vorbestimmten Wertes dieses Zustandsparameters, des Gewichts, ein selbsttätiges Beenden des Abarbeitungsprogramms durchführbar ist. Das genannte selbsttätige Beenden versteht sich wiederum wie vorstehend schon ausgeführt gegebenenfalls im Hinblick auf den einen Zustandsparameter, der im Wesentlichen für die genannte Gewichtsveränderung in einem solchen Zusammenhang von Bedeutung sein kann. Also insbesondere eine Aufheiztemperatur als Zubereitungsparameter. Das Beenden kann auch hier bedeuten, dass keine oder nur noch eine unmaßgebliche Wärme in das Zubereitungsgut eingetragen wird, dass aber beispielsweise das Rührwerk weiter aktiv betrieben ist.

Gegebenenfalls kann auch in den zuletzt betrachteten Fällen die Messung des Zubereitungsparameters, also im Beispielsfall die Viskositätsmessung, wie sie auch am Beispiel der Sahnezubereitung erläutert ist, auch kombiniert durchgeführt werden mit der Bestimmung eines weiteren Zubereitungsparameters, um eine größere Sicherheit hinsichtlich des Beenden des Abarbeitungsprogramms zu erreichen.. Im vorbetrachteten Fall bedeutet dies also, dass nicht nur der Zubereitungsparameter Gewicht sondern auch der Zubereitungsparameter Viskosität gemessen und programmmäßig berücksichtigt wird.

Eine weitere Ausgestaltung des Abarbeitungsprogramms im Hinblick auf eine selbsttätige Erreichung eines möglichst optimalen Zustands des Zubereitungsgutes kann darin bestehen, dass kontinuierlich oder in bestimmten zeitlichen Abständen im Zuge dieses Abarbeitungsprogramms eine Temperaturmessung bzgl. des Zubereitungsgutes, gegebenenfalls die Temperatur einer Heizplatte, durchführbar ist bzw. durchgeführt wird und dass bei Erreichen bzw. Überschreiten eines vorbestimmten zeitlichen Anstiegs der Temperatur eine selbsttätige Beendigung des Abarbeitungsprogramms durchführbar ist bzw. durchgeführt wird. Hierbei kommt es ersichtlich nicht (vordergründig) auf das Erreichen einer bestimmten absoluten Temperatur an, sondern auf das Erreichen eines bestimmten Temperaturgradienten.

Die absolut (jeweils) erreichte Temperatur kann andererseits als Zustandsparameter auch in die Bewertung einbezogen werden.

Eine solche Temperaturmessung kann beispielsweise bei einer Zubereitung von Reis von Bedeutung sein. Für eine Zubereitung von Reis wird bevorzugt zunächst eine erforderliche Menge an Wasser, gegebenenfalls versetzt mit einem bestimmten Anteil an Salz und/oder Öl, in ein Rührgefäß eingegeben und es erfolgt eine Erhitzung, vorzugsweise bei gleichzeitigem Rühren. Diese Flüssigkeit wird zunächst bis zum Siedepunkt erhitzt und sodann das eigentliche Zubereitungsgut, hier also Reis, hinzugefügt. Es kann auch das eigentliche Zubereitungsgut sogleich mit enthalten sein.

Es erfolgt sodann ein Garen bei dem Siedepunkt, was aufgrund der natürlicher Weise sich einstellenden Siedepunkttemperatur dazu führt, dass praktisch bei genügender Heizleistung eine konstante Temperatur herrscht. Im Zuge dieses Zubereitens verdampft aber das Wasser, so dass zu einem bestimmten Zeitpunkt nur noch ein so geringer Anteil an Wasser in dem Rührgefäß vorhanden ist, dass ein Temperaturanstieg, bei weiter gegebener (gleicher) Heizleistung, über die genannte Siedepunkttemperatur hinaus erfolgt. Wenn nun eine entsprechende Messung der Temperatur als Zustandsparameter, bevorzugt in regelmäßigen Abständen, vorgenommen wird, ist dieser Temperaturanstieg (Gradient) erkennbar. Er ist zugleich ein Hinweis darauf, dass die Zubereitung des Reises abgeschlossen ist und kann daher als Signal gewertet werden, in diesem Fall das Abarbeitungsprogramm zu beenden.

Verfahrensmäßig wird die Überprüfung des Zubereitungsgutes hinsichtlich der Zustandsparameter, insbesondere im weiter vorne beschriebenen allgemeinen Fall, vorzugsweise, jedenfalls zunächst, nach erfolgter Einbringung in das Rührgefäß vorgenommen, und zwar weiter bevorzugt unmittelbar nach Eingabe, so dass beispielsweise innerhalb einer oder innerhalb von bis zu fünf Minuten ab Eingabe des Zubereitungsgutes die Zustandsparameter überprüft werden oder zur Eingabe von dem Gerät erfragt werden. Sie können dann in dem Abarbeitungsprogramm Berücksichtigung finden im Hinblick auf Zubereitungsparameter wie Drehzahl, Zeitdauer, Aufheiztemperatur etc. Diese Zustandsparameter können insbesondere auch Umgebungsparameter sein. Als Umgebungsparameter kommen die schon genannten Parameter Luftfeuchte und/ oder Luftdruck insbesondere in Frage. Auch diese als Umgebungsparameter speziellen Zustandsparameter werden bevorzugt möglichst zeitgleich mit sonstigen Zustandsparametern erfasst. Als sonstige Zustandsparameter kommen etwa auch in Frage Feuchtegehalt des Zubereitungsgutes und/ oder (Ausgangs-) Temperatur des Zubereitungsgutes (etwa zur Unterscheidung ob es aus dem Kühlschrank kommt oder eine (hohe) Umgebungstemperatur besitzt) und/ oder, etwa bei einer im Prinzip fließfähigen Masse, Viskosität des Zubereitungsgutes. Hierbei kann von der Küchenmaschine in einem Abarbeitungsprogramm etwa vorgenommene Änderung zu einem Ausgangswert angezeigt werden, bevorzugt mit der Möglichkeit für den Benutzer, die Änderung zur weiteren Durchführung des Abarbeitungsprogramms zu akzeptieren, abzulehnen und/ oder weiter selbst zu ändern.

Ergänzend oder alternativ kann die Überprüfung eines Zubereitungsparameters und/ oder eines Zustandsparameters bezüglich des Zubereitungsgutes auch, wie an den vorher ausgeführten Beispielsfällen insbesondere erläutert, im Rahmen einer Abarbeitung, also beispielsweise während einer Rühr- und/ oder Aufheizphase (erst) durchgeführt oder wiederholend durchgeführt werden. Sie kann auch mehrmals während dieser Abarbeitung durchgeführt werden.

Hierzu können, ergänzend oder alternativ zu den beschriebenen küchengeräteeigenen Möglichkeiten solche Werte zu erfassen, in oder an der Küchenmaschine geeignete Sensoren vorgesehen sein oder die Werte können benutzerseitig durch ein gesondertes Messinstrument ermittelt sein und dann, gegebenenfalls auf entsprechende Anfrage des Geräts im Programmablauf hin, eingegeben werden.

Die Einrichtung der Küchenmaschine derart, dass sie die genannten oder zumindest einen der Zustandsparameter und/ oder Umgebungsparameter ermitteln kann und auch auf das Abarbeitungsprogramm einwirken kann, ist insbesondere auch dadurch erreicht, dass die Küchenmaschine einen Mikroprozessor aufweist, der eine entsprechende Verarbeitung von erfassten Signalen durchführen kann. Durch diesen Mikroprozessor wird bevorzugt auch das Abarbeitungsprogramm als solches gesteuert. Dem Mikroprozessor ist vorzugsweise, weiter vorzugsweise in der Küchenmaschine selbst, ein Datenspeicher, insbesondere ein nicht flüchtiger, aber bevorzugt änderbarer, Datenspeicher zugeordnet, in welchem ein Arbeitsprogramm und/ oder eine Wertetabelle etc. gespeichert sein können. Weiter können ein oder mehrere Sensoren vorgesehen sein, die unmittelbar in der Küchenmaschine angeordnet sind und die gewünschten Werte liefern. Die Ermittlung der Werte kann auch durch Verfahrensweisen der Küchenmaschine, wie vor- und nachstehend auch erläutert, und hierbei erfasste Parameter, wie Strom und/oder Spannung etc., erreicht sein. Ergänzend oder alternativ kann ein solcher Wert auch auf einem Etikett des Zubereitungsgutes, wenn dieses noch verpackt ist, enthalten sein und beispielsweise über ein Lesegerät von der Küchenmaschine einlesbar sei. Weiter alternativ oder ergänzend können Werte auch frei eingegeben werden, etwa im Hinblick auf eine Abfrage durch die Küchenmaschine. Dies können Werte, wie Feuchtegehalt des Zubereitungsgutes, Reifegrad des Zubereitungsgutes, Temperatur des Zubereitungsgutes etc., sein.

Darüber hinaus können insbesondere Umgebungswerte als Zustandsparameter auch durch selbsttätige Übertragung, etwa durch Wlan, Bluetooth und/oder sonstige Funksignale von außerhalb der Küchenmaschine befindlichen Geräten erlangt sein. Im Weiteren können derartige Umgebungsparameter, wie beispielsweise Lufttemperatur oder Luftfeuchte, von der Küchenmaschine zur Eingabe von Hand durch einen Benutzer anforderbar sein. Im Falle, dass ein Wert nicht eingegeben wird, kann auch vorgesehen sein, dass auf einen Standardwert übergegangen wird beziehungsweise der schon zugrundegelegte Wert belassen wird.

Im Weiteren ist auch bevorzugt, dass die Anpassung eines Ausgangswertes unter Berücksichtigung von einem dem Zubereitungsgut innewohnenden Grenzwert vornehmbar ist. Dies bedeutet beispielsweise, dass bei einem Mahlen von Mehl bei Überschreiten einer bestimmten Temperaturgrenze ein Mahlvorgang nicht auslösbar ist und/oder ein Warnhinweis an einen Benutzer erfolgt, den Mahlvorgang nicht durchzuführen oder eine Freigabe für den Mahlvorgang nicht zu erteilen, und/oder dass ein Mahlvorgang selbsttätig abgebrochen wird und/oder ein Warnsignal von der Küchenmaschine abgegeben wird, den Zubereitungsvorgang, hier den Mahlvorgang, abzubrechen, denn bei Mehl können in Abhängigkeit von der Temperatur im Mehl enthaltene Nährstoffe Schaden nehmen. Der Umstand kann sich beispielsweise ergeben, wenn das Zubereitungsgut Mehl in ein Rührgefäß eingegeben wird, mit dem zuvor unter Erhitzung eines anderen Zubereitungsgutes gearbeitet wurde und die Temperatur bei Eingabe des Mehls noch in dem Rührgefäß herrscht.

Insbesondere ist bevorzugt, wie weiter vorne schon im Hinblick auf speziellere Fälle erläutert, dass ein Zustandsparameter durch ein beim Zubereiten des Zubereitungsgutes auf dieses zubereitend einwirkendes Geräteteil ermittelbar ist. Die sensormäßige Erfassung von Zustandsdaten ist also nicht darauf beschränkt, dass die Erfassung vor Beginn eines Zubereitungsschrittes, wie etwa einem Rühren mit einer bestimmten Drehzahl und gegebenenfalls einer bestimmten Temperatur über einen vorgegebenen Zeitraum erfolgt. Vielmehr kann auch während der Abarbeitung eines Zubereitungsschrittes, also etwa einem Betrieb des Rührwerkes bei einer vorgegebenen Drehzahl über einen vorgegebenen Zeitraum, eine Erfassung eines Zustandsparameters erfolgen.

Beispielsweise kann bei einem Zubereiten von Mehl durch Einrühren von Milch und/oder Eiern im Hinblick auf die vorgegebene Menge der Zubereitungsgüter ein bestimmter Rührwiderstand, der sich auch über die Zeit ändern kann, erwartet werden. Dieser Rührwiderstand, der als Maß für die Viskosität des Zubereitungsgutes herangezogen werden kann, kann in einem Abarbeitungsprogramm, gegebenenfalls tabellenmäßig und mit gewisser Bandbreite, als Ausgangswert erfasst und vorgegeben sein. Wenn dieser Rührwiderstand, der beispielsweise abweichend oder ergänzend zu den weiter vorne beschriebenen Beispielen betreffend Sahne oder Marmelade über den Motorstrom des das Rührwerk antreibenden Elektromotors gemessen werden kann, von dem Ausgangswert, der entsprechend auch eine Ausgangswert-Bandbreite beinhalten kann und insbesondere über die Zeitachse veränderlich vorgegeben sein kann, aus dieser Vorgabe herausfällt, kann das dazu genutzt sein, dem Benutzer diese Abweichung von der Vorgabe beziehungsweise dem erwarteten Wert zu melden, gegebenenfalls zugleich aber auch die Drehzahl und/oder die Zeitdauer des Rührvorgangs entsprechend anzupassen und/oder dem Benutzer vorzuschlagen, etwa zur weiteren Verdünnung, wenn der Widerstand zu hoch wird, ein weiteres Zubereitungsgut, wie etwa eine bestimmte Menge Milch und/oder Eiern, nachzufüllen.

Bei dem Beispiel der Zubereitung von Sahne, aber auch unabhängig hiervon, kann beispielsweise vorgesehen sein, dass in einer programmierten Abfolge das Rührwerk mit einer niedrigen Drehzahl, beispielsweise 30 bis 50 U/min, bevorzugt 40 U/min, und einer hohen Drehzahl, beispielsweise 300 bis 500 U/min, bevorzugt 400 U/min, betätigt wird. Es ergibt sich dann ein ein- oder mehrfach oszillierender Betrieb zwischen solchen Drehzahlen. Mit zunehmender Änderung der Viskosität des zu bearbeitenden Mediums, hier also mit zunehmender Steifigkeit beispielsweise der Sahne, kann eintreten, dass die untere Vorgabe-Drehzahl von dem Elektromotor nicht mehr gehalten werden kann oder, etwa ab Unterschreiten einer bestimmten Mindestdrehzahl, keine Einhaltung mehr vorgesehen ist. Es kommt dann also zu einer Unterschreitung dieser unteren Drehzahl. Diese Unterschreitung kann durch einen Drehzahlmesser, den Motorstrom oder auch beispielsweise über eine Lichtschranke, erfassbar sein. In Abhängigkeit von der Drehzahlunterschreitung oder einer Anzahl von Drehzahlunterschreitungen über eine vorgegebene Bandbreite des oszillierenden Betriebes kann erkannt werden, dass der Zubereitungsschritt zu beenden ist, also beispielsweise die Sahne als fertig zubereitet anzusehen ist. Hiernach kann das Gerät abschalten und eine Fertigstellung melden, oder aber auch, falls ein weiterer Zubereitungsschritt, etwa das Einrühren von weiterem Zubereitungsgut in die so fertiggestellte Sahne, erfolgen soll, diesen Schritt dann zur Durchführung gleichsam anmelden.

Die genannte Erfassung, ob ein Zubereitungsgut fertig zubereitet ist, beispielsweise auch, ob ein Rezeptschritt insoweit als beendet angesehen werden kann, kann etwa auch dadurch erreicht sein, dass das Rührwerk auf einer hohen Drehzahl, etwa in dem angegebenen vorstehenden oberen Bereich, umläuft und der Antrieb bei dieser Drehzahl ausgeschaltet wird. Es kann dann eine Messung durchgeführt werden, bis der Antrieb eine untere, vordefinierte Drehzahl beim Auslaufen erreicht oder bis er den Stillstand beispielsweise erreicht. Wenn dieses Erreichen innerhalb eines vorgegebenen, hier insbesondere zeitlichen, Grenzwertes, gegeben ist, kann auch diese Erfassung eines Kennwertes als Beendigung des diesbezüglichen Rezeptschrittes oder der diesbezüglichen Zubereitung angesehen und von der Küchenmaschine in der schon beschriebenen Weise ausgewertet werden.

Alternativ oder ergänzend kann auch der zeitliche Wert genutzt werden, der bis zum Hochlaufen, insbesondere aus einem Stillstand oder aus einer vorgegebenen niedrigen Drehzahl, von dem Rührwerk benötigt wird und in gleicher Weise dann die entsprechende Folge in der Küchenmaschine, wie beschrieben, auslösen.

Weiter alternativ oder ergänzend kann auch eine Richtungsumkehr des Rührwerks, insbesondere die Zeit, welche das Rührwerk benötigt, um von einer vorgegebenen Drehzahl in einer Richtung in eine vorgegebene, bevorzugt selbe Drehzahl, in der anderen Richtung zu wechseln, genutzt werden.

Auf diese Weise kann entsprechend mit einem Geräteteil eine zur Ermittlung des Zustandsparameters dienende Bewegungsabfolge durchführbar sein.

Weiter kann ein Geräteteil auch dadurch auf das Zubereitungsgut einwirken, dass es beispielsweise - wie im Falle einer von der Rührgefäßwand nach innen vorragenden Strömungsschikane - beim Rühren einem bestimmten Druck ausgesetzt ist, der auch in Abhängigkeit der Zähigkeit des Rührgutes unterschiedlich sein kann, insbesondere auch über die Zeitachse unterschiedliche Werte einnehmen kann. Dieser Druck kann über geeignete, insbesondere die Belastung der Rührgefäßwand erfassende Sensoren, wie etwa an der Rührgefäßwand angebrachte Dehnungsmessstreifen, erfasst werden und in gleicher Weise zur Bestimmung des tatsächlichen Zustandes des Zubereitungsgutes beziehungsweise einer zum gegebenen Zeitraum in dem Rührgefäß befindlichen Zubereitungsmasse und gegebenenfalls hieraus abzuleitender Änderungen von Zubereitungsparametern genutzt werden.

Insbesondere ist aber bevorzugt, dass das einwirkende Geräteteil, wie etwa insbesondere das Rührwerk, elektromotorisch angetrieben ist und dass zur Ermittlung des Zustandsparameters eine Motorkennzahl, wie die Drehzahl und/oder der Motorstrom, des Elektromotors auswertbar ist.

Insbesondere ist auch bevorzugt, dass zu der Zubereitung der Speise im Wege einer Abarbeitung eines Rezeptes anhand von einzelnen Rezeptschritten nacheinander unterschiedliche Mengen und/oder Arten von Zubereitungsgut in das Rührgefäß einzugeben sind und dass die Menge und/oder die Art des Zubereitungsgutes bei einem folgenden Rezeptschritt in Abhängigkeit von einem bei einem vorherigen Rezeptschritt erfassten Zustandsparameter (gegebenenfalls: Umgebungsparameter) änderbar ist. Beispielsweise kann etwa durch einen Geruchssensor auch erfassbar sein, dass eine Zugabe von beispielsweise Senf etwa bei Zubereitung einer Speise wie Mayonnaise mit einer zu großen Menge vorgenommen wurde, woraufhin eine Meldung erfolgen kann, die dem Benutzer vorgibt, das bei einem nächsten Rezeptschritt einzugebende Zubereitungsgut, beispielsweise Essig und/oder Eidotter in einer hieraus ermittelten abweichenden Menge gegenüber der eigentlich rezeptmäßig vorgegebenen Menge einzugeben. Gleichfalls kann in Abhängigkeit von einem bei einem vorherigen Rezeptschritt erfassten Zustandsparameter (gegebenenfalls: Umgebungsparameter) auch in einem nachfolgenden Rezeptschritt eine Änderung eines Zubereitungsparameters, auf vorstehende Beispielsangaben wird verwiesen, vorgenommen werden, sei es selbsttätig durch die Küchenmaschine oder als angezeigte Möglichkeit, die vom Benutzer beispielsweise zur tatsächlichen Umsetzung zu quittieren ist.

Insbesondere die vorstehend beschriebenen Verfahrensschritte beziehungsweise die vorstehend beschriebenen Ausgestaltungen der Küchenmaschine bei einem nachfolgenden Rezeptschritt zuvor erfasste Änderungen eines Zubereitungsparameters auch zu berücksichtigen, hat auch eigenständige Bedeutung.

Die Rezeptabarbeitung ist bevorzugt derart vorgesehen, dass - etwa zwischen zwei Rezeptschritten - jede Eingabe von Zubereitungsgut durch einen Benutzer vorzunehmen ist. Hierzu kann die Küchenmaschine anhalten, aber auch ein Zeitfenster einräumen, mit dem während des Betriebs des Rührwerkes und/oder während einer fortgesetzten Aufheizung Zubereitungsgut einzugeben ist. Hierzu weist die Küchenmaschine weiter bevorzugt ein Anzeigemittel, wie ein Display, auf, welches die durch den Benutzer vorzunehmende Eingabe von Zubereitungsgut hinsichtlich einer Art und/oder einer Menge des Zubereitungsgutes anzeigen kann.

Entsprechend lassen sich die genannten Schritte auch verfahrensmäßig durchführen.

Nachstehend sind die genannten möglichen Ausgestaltungen der Küchenmaschine und die mögliche Verfahrensweise noch anhand beigefügter Zeichnung erläutert. Hierbei zeigt:
- Fig. 1: eine Küchenmaschine, wie sie hier zum Einsatz kommen kann;
- Fig. 2: ein Verfahrensablaufschema, wie es durchgeführt werden kann beziehungsweise mittels der genannten Küchenmaschine durchführbar ist;
- Fig. 3: eine schematische Darstellung einer Rührwerksaktivität am Beispiel einer Zubereitung von Sahne;
- Fig. 4: eine schematische Darstellung einer Gewichtsüberwachung am Beispiel einer Zubereitung von Marmelade; und
- Fig. 5: eine schematische Darstellung einer Temperaturüberwachung am Beispiel einer Zubereitung von Reis.

Dargestellt und beschrieben ist eine Küchenmaschine 1. Die Küchenmaschine 1 weist ein Rührgefäß 2 auf, mit einem am Boden des Rührgefäßes angeordneten Rührwerk 3. Weiter ist das Rührgefäß 2 aufheizbar, beispielsweise durch eine bodenseitig des Rührgefäßes vorgesehene elektrische Widerstandsheizung (vergleiche etwa eingangs genannte EP 1274333 B1).

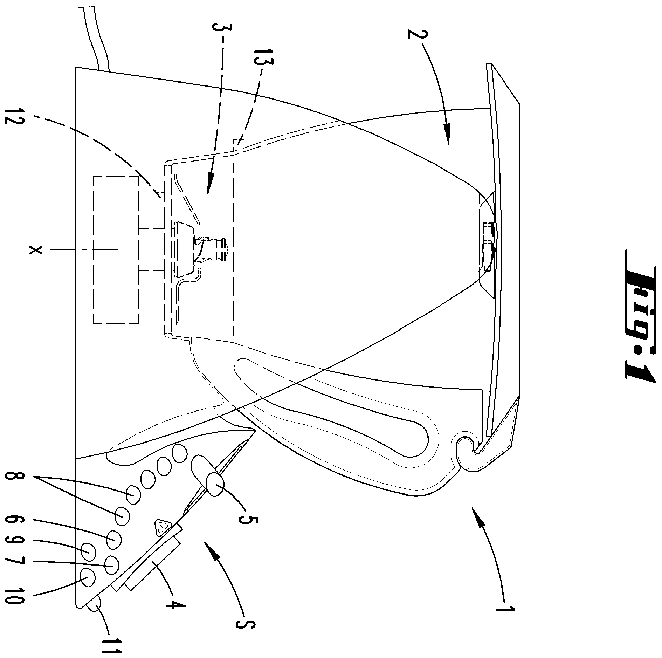

Auf der in Figur 1 sichtbaren Bedienseite S des Gerätes ist ein Display 4 vorgesehen, des weiteren beispielsweise ein Drehzahlschalter 5 zur Einstellung einer Rührwerksgeschwindigkeit. Zudem sind Betätigungstasten 6 und 7 für eine Zeiteinstellung über das Display 4 vorgesehen. Weiter sind beispielsweise Tasten 8 vorgesehen, die eine Temperaturvorwahl ermöglichen. Darüber hinaus sind bevorzugt Schalter 9 bis 11 vorgesehen, um bestimmte Funktionen, wie etwa eine Turbofunktion, Wiegefunktion oder dergleichen auszulösen. Anstelle von Tasten und/oder Schaltern können auch andere Einwirkungsmittel, beispielsweise ein Touchscreen, vorgesehen sein. Im letzteren Fall können beispielsweise auf dem als Touchscreen ausgebildeten Display entsprechende Symbole erscheinen, die von Hand oder mit einem Hilfsmittel durch Berühren des Bildschirms dann veränderbar sind, etwa im Hinblick auf eine Temperaturabfolge oder eine Drehzahl etc.

Weiter ist, was im Einzelnen nicht dargestellt ist, ein Mikroprozessor und mindestens ein bevorzugt nicht flüchtiger Speicher, jedenfalls ein Datenspeicher, in dem Gerät vorgesehen. Weiter können zur selbsttätigen Abarbeitung vorgesehene Rezepte und insbesondere innerhalb eines Rezeptes einzelne Rezeptschritte zur Abarbeitung durch den Mikroprozessor gespeichert sein. Über die genannten Betätigungsmittel können aber auch unabhängig in der Maschine Einstellungen vorgenommen werden beziehungsweise in Wechselwirkung mit der Rezeptabarbeitung Eingriffe in die selbsttätige Abarbeitung vorgenommen werden, etwa, wie erwähnt, zur Änderung in der selbsttätigen Abarbeitung enthaltenen Ausgangswerten (oder Ausgangswertbereichen).

Weiter können Sensoren vorgesehen sein, wie ein oder mehrere Temperatursensoren 12, 13. Diese können beispielsweise am Boden des Rührgefäßes und/oder einer Wandung des Rührgefäßes, gegebenenfalls auch in verschiedenen Höhen der Wandung des Rührgefäßes, zugeordnet vorgesehen sein. Weiter kann auch ein Luftdruck- und/oder Luftfeuchte-Sensor in oder an der Küchenmaschine vorgesehen sein.

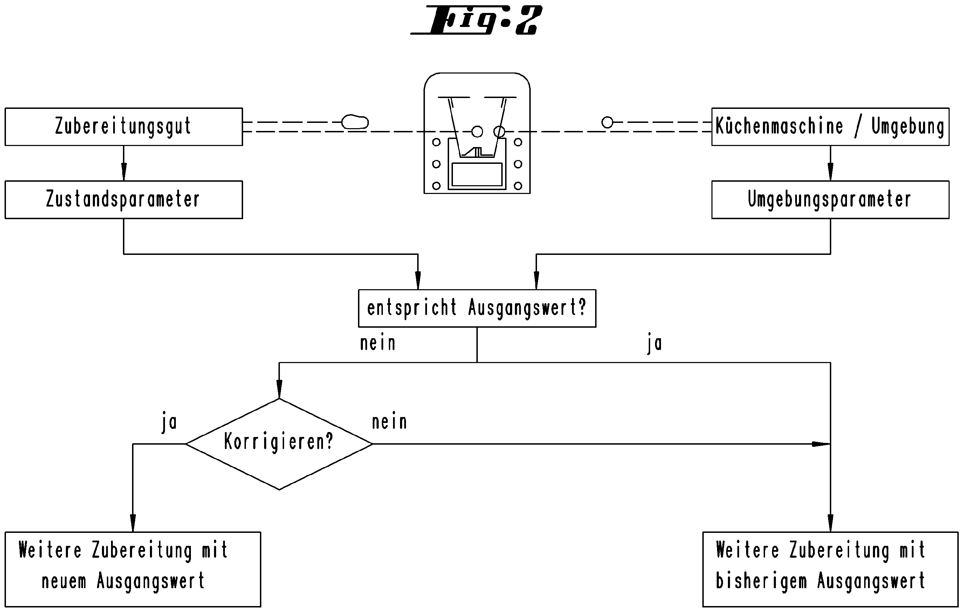

In Figur 2 ist schematisch dargestellt, in welcher Weise die Küchenmaschine verfahrensmäßig vorgeht beziehungsweise betreibbar ist. Zunächst werden von dem Zubereitungsgut, und/oder der Küchenmaschine beziehungsweise der Umgebung, die genannten Messwerte erfasst (hinsichtlich eines außerhalb des Rührgefäßes beispielsweise erfassten Messwertes des Zubereitungsgutes ist als Symbol eine Kartoffel dargestellt), und als Zustandsparameter (speziell auch: Umgebungsparameter) berücksichtigt. Diese werden verglichen mit eingegebenen Ausgangswerten. Wenn die erfassten Messwerte den Ausgangswerten, gegebenenfalls nach entsprechender Umrechnung, entsprechen, wird eine Zubereitung entsprechend der vorgesehenen Abfolge mit den vorgesehenen Schritten, wie etwa Aufheiztemperatur des Rührgefäßes und/oder Drehzahl des Rührwerks, durchgeführt. Entsprechen die erfassten Werte den vorgegebenen Ausgangswerten nicht, wird weiter geprüft, ob die Ausgangswerte derart änderbar sind, dass eine weitere Bearbeitung sinnvoll durchführbar ist. In diesem Fall werden neue Ausgangswerte erstellt und bevorzugt selbsttätig oder zur Auswahl des Benutzers gestellt, die weitere Abarbeitung eines Zubereitungsschrittes durchgeführt/ durchzuführen.

Wenn die Ausgangswerte nicht derart änderbar sind, dass es ohne eine sehr erhebliche Beeinflussung der Qualität der zu erstellenden Speise die weitere Abarbeitung möglich ist, wird der Zubereitungsschritt unterbrochen und entsprechend dem Benutzer angezeigt oder dem Benutzer zur Auswahl gestellt, gleichwohl den Zubereitungsschritt weiterzuführen.

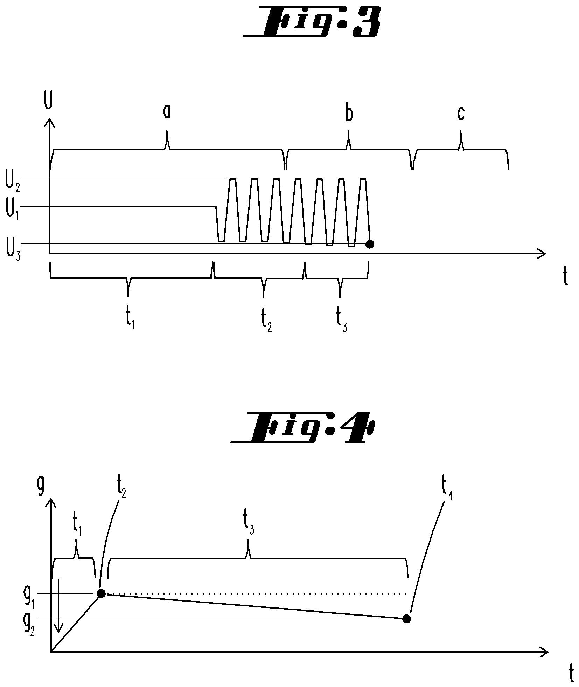

Mit Bezug zu Figur 3 ist schematisch über die Zeitachse t die Drehzahl U eines Rührwerkes bei dem Beispielsfall der Zubereitung von Sahne dargestellt. Über einen ersten Zeitraum t₁ wird das Ausgangsmedium bevorzugt mit einer konstanten Drehzahl U₁ beaufschlagt. Die Drehzahl U₁ kann beispielsweise im Bereich von 200 bis 300 U/min angesiedelt sein. Nach Ablauf des ersten Zeitraums t₁ beginnt ein Zeitraum t₂, in welchem programmgemäß zwischen einer hohen Drehzahl U₂, die beispielsweise bei 400 U/min angesiedelt sein kann, und einer niedrigen Drehzahl U₃ abgewechselt wird. Der Zeitraum t₁ kann gegebenenfalls auch entfallen, die Einwirkung auf das Zubereitungsgut also gegebenenfalls auch sogleich mit der wechselnden Einwirkung zwischen einer hohen Drehzahl und einer niedrigen Drehzahl beginnen. Die niedrige Drehzahl kann beispielsweise 40 U/min betragen. Hierbei erfolgt im Bereich der niedrigen Drehzahl keine selbsttätige Nachregulierung der tatsächlichen Drehzahl auf die vorbestimmte Drehzahl. So wird eintreten, gegebenenfalls nach einem mehrmaligen Wechsel zwischen den genannten Drehzahlen, hier in dem Zeitraum t₃ verdeutlicht, dass eine Unterschreitung der tatsächlichen unteren Drehzahl U₃ im Vergleich zu der vorbestimmten Drehzahl U₃ eintritt. Bei dem dargestellten Beispielsfall ist ein erstmaliges und gegebenenfalls auch weiteres Unterschreiten als Einzeltatsache noch nicht gewertet worden, einen Abbruch der Rührwerksaktivität vorzusehen. Hierzu kann programmgemäß auch eine bestimmte Mehrzahl von Unterschreitungen erst in diesem Sinne gewertet werden. Dies etwa um Zufallswerte auszuschalten. Alternativ oder ergänzend kann auch vorgesehen sein, dass erst bei einem deutlichen Unterschreiten, wenn also die vorbestimmte untere Drehzahl U₃ um mehrere Drehzahlen unterschritten wird, der Abbruch der Rührwerksaktivität erfolgt. Im Beispielsfall ist die untere Drehzahl U₃ mit 35 U/min angenommen und der Abbruch der Rührwerksaktivität dann vorgesehen, wenn eine tatsächliche untere Drehzahl von 33 U/min unterschritten wird.

Entsprechend kann man über die Zeitachse auch verschiedene Aggregatzustände, die sich hiernach einstellen, unterscheiden. In einem ersten Zeitraum a ist das Zubereitungsgut flüssig, in einem zweiten Zeitraum b ist es sahneartig und in einem hier nicht zu erreichenden dritten Zeitraum c wäre es butterartig. Die hohe Drehzahl und die niedrige Drehzahl werden bevorzugt jeweils über eine gewisse Zeitspanne beibehalten. Diese Zeitspanne kann sich in einem Bereich von einigen wenigen Sekunden, 2 Sek., 3 Sek., 10 Sek., 20 Sek. oder mehr bis hin zu beispielsweise 1 Min. oder 2 Min. jeweils bewegen.

Mit Bezug zu Figur 4 ist am Beispiel der Zubereitung von Marmelade die Überwachung und Auswertung des Zustandsparameters Gewicht verdeutlicht. Das Gewicht g ist über die Zeitachse t aufgetragen.

Zunächst, in einem Zeitraum t₁, werden die erforderlichen Zutaten in das Rührgefäß der Küchenmaschine eingegeben. Zu einem Zeitpunkt t₂ wird dann durch Wahl einer Aufheiztemperatur und einer Rührwerksdrehzahl die Zubereitung (Marmelade kochen) begonnen. Zugleich wird das Ausgangsgewicht g₁ bestimmt.

Es wird dann in regelmäßigen Zeitabständen, die im Einzelnen nicht dargestellt sind, bevorzugt ohne ein Unterbrechen der Zubereitung, jeweils eine Gewichtsmessung vorgenommen bis das Endgewicht g₂ erreicht ist, das programmgemäß dann die Beendigung der Zubereitung auslöst, also die Aufheizung einstellt und dann, gegebenenfalls mit gewisser Verzögerung auch zur Abstellung des Rührwerks führt.

Bei dem Beispielsfall wird der Unterschied zwischen g₁ und g₂ beispielsweise auf 10 bis 15 Prozent, weiter bevorzugt 12 Prozent des Ausgangsgewichts g₁ bezogen.

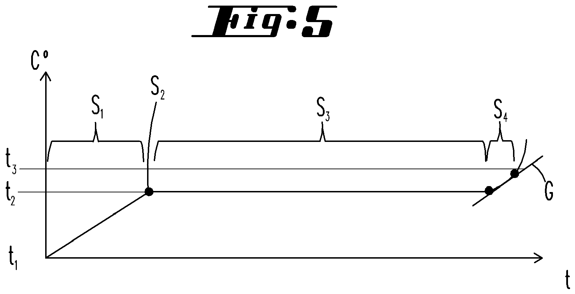

Mit Bezug zu Figur 5 ist am Beispiel der Zubereitung von Reis die Einbeziehung einer Temperaturmessung, insbesondere die Bestimmung eines Temperaturgradienten, in das Abarbeitungsprogramm, zur Beendigung der wesentlichen Zubereitungseinwirkung, beschrieben.

Über die Zeitachse t ist hier die Temperatur in Grad Celsius aufgetragen.

Zunächst wird, üblicherweise bei einer Umgebungstemperatur t₁, Wasser und gegebenenfalls Salz und/oder Öl in das Rührgefäß eingegeben und über einen Zeitraum S₁ erhitzt. Nämlich bis zu einer Siedetemperatur t₂ des Wassers, die bekanntlich unter üblichen Bedingungen ca. 100° C ist. Zu einem Zeitpunkt S₂, bei dem in der Regel und bevorzugt die Siedetemperatur auch bereits erreicht ist, wird der Reis in Form von Reiskörnern hinzugefügt. Es erfolgt über einen Zeitraum S₃ eine weitere Einbringung von Heizenergie in das Rührgefäß, derart, dass die Siedetemperatur t₂ aufrechterhalten bleibt.

Da durch das Sieden aber zugleich auch ein gewisser Anteil des Wassers verdunstet, nimmt das Wasser in dem Rührgefäß kontinuierlich ab. Es kommt daher in einem Zeitraum S₄ bei fortgesetzter Zuführung der Heizenergie wie sie üblicherweise für die Aufrechterhaltung der Siedetemperatur erforderlich ist, zu einem Anstieg der Temperatur, weil die Begrenzung durch die Siedetemperatur des Wassers nicht mehr wirksam ist. Die eingebrachte Heizleistung kann nicht mehr unter Beibehaltung der Siedetemperatur durch verdampfendes Wasser abgeführt werden.

Der sich in dem Zeitrum S₄ somit einstellende Temperaturanstieg kann nun, durch eine kontinuierliche, in festgelegten vorbestimmten Zeiträumen beispielsweise, maschinenseitig vorgenommene Temperaturmessung erfasst werden und bei Erreichen eines bestimmten Temperaturgradienten G und/oder einer vorher festgelegten Maximaltemperatur t₃ die Beendigung des Abarbeitungsprogramms insoweit ausgelöst werden. Die Temperatur t₃ kann beispielsweise 105° C betragen.

Die kontinuierlich vorgenommene Temperaturmessung kann im Weiteren auch zu Beginn des Abarbeitungsprogramms dazu genutzt werden, den Zeitpunkt S₂ zu erfassen und beispielsweise eine Meldung auszugeben, dass nunmehr der Reis eingegeben werden kann. Auch insoweit kann gegebenenfalls alternativ oder ergänzend der Temperaturgradient herangezogen werden.

Die Temperaturmessung im Einzelnen kann in unterschiedlicher Weise erfolgen. Beispielsweise kann als Maß für die signifikante Temperatur die Temperatur einer Heizplatte selbst, die sich im Boden des Rührgefäßes befinden kann, genommen werden. Es kann auch ein Temperatursensor in der Wandung des Rührgefäßes gegeben sein, der jedenfalls in diesem Wandungsbereich die Temperatur auch des Zubereitungsgutes unmittelbar erfassen kann.

Hinsichtlich der Gewichtsmessung, wie sie bei dem Beispiel gemäß Figur 4 im Vordergrund steht, können übliche Waagenausgestaltungen einer solchen Küchenmaschine zur Anwendung kommen. Beispielsweise können Messbalken oder Gewichtssensoren in den Füßen der Küchenmaschine, mit welchem sie etwa auf einer Küchenplatte aufstehen kann, jeweils vorgesehen sein. Somit kann die gesamte Küchenmaschine, mit Ausnahme der eigentlichen Füße, gewichtsmäßig erfasst werden. Es kann sich aber auch nur um eine gewichtsmä-ßige Erfassung des eigentlichen Rührgefäßes innerhalb der Küchenmaschine handeln.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

### Bezugszeichenliste

- 1: Küchenmaschine
- 2: Rührgefäß
- 3: Rührwerk
- 4: Display
- 5: Drehzahlschalter
- 6: Betätigungstaste
- 7: Betätigungstaste
- 8: Taste
- 9: Schalter
- 10: Schalter
- 11: Schalter
- 12: Temperatursensor
- 13: Temperatursensor

- a: 1. Zeitraum
- b: 2. Zeitraum
- c: 3. Zeitraum
- g: Gewicht
- t: Zeitachse
- s: Zeitraum
- G: Temperaturgradient
- S: Bedienseite
- U: Drehzahl

## Patentansprüche

1. Elektromotorisch betriebene Küchenmaschine mit einem aufheizbaren, zur Aufnahme eines Rührwerks ausgebildeten Rührgefäß, wobei die Küchenmaschine zum selbsttätigen Zubereiten einer Speise entsprechend einem vorgegebenen Abarbeitungsprogramm ausgebildet ist, **dadurch gekennzeichnet, dass** ein in das Rührgefäß eingegebenes Zubereitungsgut hinsichtlich seines Zustandes durch in oder an der Küchenmaschine vorgesehene Sensoren oder benutzerseitig durch ein gesondertes Messinstrument ermittelt im Hinblick auf eine Feuchte als Zustandsparameter messbar ist, oder dass ein entsprechender Wert eingebbar ist oder dass ein Umgebungszustand im Hinblick auf Zustandsparameter, wie Luftfeuchte oder Luftdruck, messbar ist oder als Wert eingebbar ist, dass ein hierbei erhaltener Messwert oder eingegebener Wert mit einem in dem Abarbeitungsprogramm berücksichtigten Ausgangswert vergleichbar ist, und dass Abweichungen zu dem Ausgangswert durch eine selbsttätige Anpassung von in dem Abarbeitungsprogramm enthaltenen Zubereitungsparametern wie Heizzeit und/ oder Heiztemperatur berücksichtigbar sind.

2. Küchenmaschine nach einem der vorhergehenden Ansprüche, **dadurch gekennzeichnet, dass** die Anpassung unter Berücksichtigung eines dem Zubereitungsgut innewohnenden Grenzwertes vornehmbar ist, und/ oder ein Zustandsparameter durch ein beim Zubereiten des Zubereitungsgutes auf dieses zubereitend einwirkendes Geräteteil ermittelbar ist.

3. Küchenmaschine nach Anspruch 2, **dadurch gekennzeichnet, dass** mit dem Geräteteil eine auch der Ermittlung des Zustandsparameters dienende Bewegungsabfolge durchführbar ist, wobei, bevorzugt, das einwirkende Geräteteil elektromotorisch angetrieben ist und zur Ermittlung des Zustandsparameters eine Motorkennzahl wie Drehzahl und/oder Motorstrom des Elektromotors auswertbar ist, und/oder das Geräteteil das Rührwerk ist und die Bewegungsabfolge durch eine selbsttätige Abfolge von unterschiedlichen Drehzahlen des Rührwerks erreicht ist.

4. Küchenmaschine nach einem der vorhergehenden Ansprüche, **dadurch gekennzeichnet, dass** zu der Zubereitung der Speise im Wege einer Abarbeitung eines Rezeptes entsprechend einzeln nacheinander durchzuführenden Rezeptschritten, wobei nacheinander unterschiedliche Mengen und/oder Arten von Zubereitungsgut in das Rührgefäß einzugeben sind, die Menge und/ oder die Art des Zubereitungsgutes bei einem folgenden Rezeptschritt in Abhängigkeit von einem bei einem vorherigen Rezeptschritt erfassten Zustands- und/ oder Umgebungsparameter änderbar ist.

5. Küchenmaschine nach einem der vorhergehenden Ansprüche, **dadurch gekennzeichnet, dass** die Eingabe von Zubereitungsgut durch einen Benutzer vorzunehmen ist, wobei, bevorzugt, die Küchenmaschine ein Anzeigemittel wie ein Display aufweist und die durch den Benutzer vorzunehmende Eingabe von Zubereitungsgut hinsichtlich einer Art und/oder einer Menge des Zubereitungsgutes anzeigbar ist.

6. Küchenmaschine nach einem der Ansprüche 1 bis 5, **dadurch gekennzeichnet, dass** ein Abarbeitungsprogramm eine mit einer vorbestimmten ersten Drehzahl erfolgende Einwirkung auf ein Zubereitungsgut enthält, wobei die erste Drehzahl von der Küchenmaschine durch Vergleich mit der tatsächlichen Drehzahl selbsttätig einhaltbar ist, und dass die vorbestimmte erste Drehzahl auf eine vorbestimmte zweite Drehzahl selbsttätig änderbar, vorzugsweise absenkbar ist, wobei die zweite Drehzahl von der Küchenmaschine nicht selbsttätig einhaltbar ist, aber eine Überwachung der tatsächlich erreichten Drehzahl möglich ist.

7. Küchenmaschinen nach einem der Ansprüche 1 bis 5, **dadurch gekennzeichnet, dass** ein Abarbeitungsprogramm eine Abfolge von unterschiedlichen Drehzahlen, eingehalten über eine bestimmte Zeitdauer, betrifft, dass die Küchenmaschine über eine Einrichtung verfügt, die vorbestimmte Drehzahl mit einer tatsächlichen Drehzahl zu vergleichen und gegebenenfalls die tatsächliche Drehzahl zur Erreichung der vorbestimmten Drehzahl zu ändern, dass bei einer oder mehreren der bestimmten Drehzahlen, bevorzugt auch über die bestimmte Zeitdauer, keine Änderung der tatsächlichen Drehzahl im Hinblick auf die vorbestimmte Drehzahl durchführbar ist und dass bei unterlassener Änderung der Drehzahl die tatsächliche Drehzahl im Vergleich zu der vorbestimmten Drehzahl als Maß für die Viskosität des Zubereitungsgutes auswertbar ist.

8. Küchenmaschine nach einem der vorhergehenden Ansprüche, **dadurch gekennzeichnet, dass** ein selbsttätiges Abschalten des Rührwerkes bei Erreichen einer vorbestimmten Viskosität durchführbar ist.

9. Küchenmaschine nach einem der vorhergehenden Ansprüche, **dadurch gekennzeichnet, dass** ein in das Rührgefäß eingegebenes Zubereitungsgut hinsichtlich seines Gewichtes messbar ist, dass ein hierbei erhaltener Messwert oder Wert mit einem in dem Abarbeitungsprogramm berücksichtigten Ausgangswert vergleichbar ist wobei das Gewicht fortlaufend bzw. in bestimmten zeitlichen Abständen prüfbar ist und dass in Abhängigkeit eines Erreichens eines vorbestimmten Gewichts ein selbsttätiges Beenden des Abarbeitungsprogramms durchführbar ist.

10. Küchenmaschine nach einem der Ansprüche 1 bis 9, **dadurch gekennzeichnet, dass** kontinuierlich, oder in bestimmten zeitlichen Abständen im Zuge eines Abarbeitungsprogramms, eine Temperaturmessung bezüglich des Gargutes, gegebenenfalls die Temperatur einer Heizplatte, durchführbar ist und dass bei Erreichen eines vorgegebenen zeitlichen Anstiegs der Temperatur eine selbsttätige Beendigung des Abarbeitungsprogramms durchführbar ist.

11. Verfahren zum selbsttätigen Zubereiten einer Speise in einer elektromotorisch betriebenen Küchenmaschine mit einem aufheizbaren, zur Aufnahme eines Rührwerks ausgebildeten Rührgefäß, **dadurch gekennzeichnet, dass** ein in das Rührgefäß eingegebenes Zubereitungsgut hinsichtlich seines Zustandes im Hinblick auf Zustandsparameter wie einer Temperatur und/ oder einer Feuchte des Zubereitungsgutes gemessen wird, oder entsprechende Werte eingebbar sind oder dass ein Umgebungszustand im Hinblick auf Umgebungsparameter wie ein Luftdruck und/ oder Luftfeuchte gemessen wird, oder ein entsprechender Wert eingebbar ist, dass ein hierbei erhaltener Messwert oder eingegebener Wert mit einem in einem Abarbeitungsprogramm berücksichtigten Ausgangswert verglichen wird, und dass Abweichungen zu dem Ausgangswert zur Anpassung von in dem Abarbeitungsprogramm enthaltenen Zubereitungsparametern wie Heizzeit und/ oder Heiztemperatur verwendet werden.

12. Verfahren nach Anspruch 11, **dadurch gekennzeichnet, dass** die Anpassung unter Berücksichtigung von dem Zubereitungsgut innewohnenden Grenzwerten vorgenommen wird, und/oder ein Zubereiten des Zubereitungsgutes durch ein auf dieses zubereitend einwirkendes Geräteteil ermittelt wird, und/oder mit dem Geräteteil eine auch der Ermittlung des Zustandsparameters dienende Bewegungsabfolge durchgeführt wird,.

13. Verfahren nach Anspruch 12, **dadurch gekennzeichnet, dass** das einwirkende Geräteteil elektromotorisch angetrieben wird und zur Ermittlung des Zustandsparameters eine Motorkennzahl wie Drehzahl und/ oder Motorstrom des Elektromotors ausgewertet wird, wobei, weiter bevorzugt, das Geräteteil das Rührwerk ist und dass die Bewegungsabfolge durch eine selbsttätige Abfolge von unterschiedlichen Drehzahlen des Rührwerks erreicht wird.

14. Verfahren nach einem der Ansprüche 11 bis 13, **dadurch gekennzeichnet, dass** zu der Zubereitung der Speise im Wege einer Abarbeitung eines Rezeptes entsprechend einzelnen nacheinander durchzuführenden Rezeptschritten, wobei nacheinander unterschiedliche Mengen und/oder Arten von Zubereitungsgut in das Rührgefäß einzugeben sind, die Menge und/ oder die Art des Zubereitungsgutes bei einem folgenden Rezeptschritt in Abhängigkeit von einem bei einem vorherigen Rezeptschritt erfassten Zustands- und/ oder Umgebungsparameter geändert wird.

15. Verfahren nach einem der Ansprüche 11 bis 14, **dadurch gekennzeichnet, dass** die Eingabe von Zubereitungsgut durch einen Benutzer vorgenommen wird, wobei, bevorzugt, die Küchenmaschine ein Anzeigemittel wie ein Display aufweist und die durch den Benutzer vorzunehmende Eingabe von Zubereitungsgut hinsichtlich einer Art und/oder einer Menge des Zubereitungsgutes angezeigt wird.

## Claims

1. Kitchen appliance with an electrically driven motor comprising a heatable stirring vessel, which is formed to accommodate a stirring mechanism, wherein the kitchen appliance is made for automatically preparing a dish according to a predetermined execution program, **characterized in that** food to be prepared, which is placed into the stirring vessel, can be measured with regard to its state by means of sensors provided in or at the kitchen appliance or on the user side by means of a separate measuring instrument, determined with regard to a moisture as state parameter, or that a corresponding value can be input or that an environmental state with regard to state parameters, such as humidity or air pressure, can be measured or can be input as value, that a measurement value obtained hereby or input value can be compared to an initial value, which is considered in the execution program, and that deviations from the initial value can be considered by automatically adapting preparation parameters, such as heating time and/or heating temperature, which are included in the execution program.

2. The kitchen appliance according to claim 1, **characterized in that** the adaptation can be made in consideration of a threshold value, which is inherent to the food to be prepared, and/or that a state parameter can be determined by means of an appliance part, which has a preparatory effect on the food to be prepared in response to the preparation thereof.

3. The kitchen appliance according to claim 2, **characterized in that** a sequence of movements, which also serves to determine the state parameter, can be carried out by means of the appliance part, wherein, preferably, the appliance part, which acts, is driven by an electric motor and that a characteristic motor number, such as speed and/or the motor current of the electric motor can be evaluated for determining the state parameter, and/or the appliance part is the stirring mechanism and the sequence of movements is reached by means of an automatic sequence of different speeds of the stirring mechanism.

4. The kitchen appliance according to one of the preceding claims, **characterized in that** for preparing the dish by means of executing a recipe according to individual recipe steps, which are to be carried out one after the other, wherein different quantities and/or types of food to be prepared must be put into the stirring vessel one after the other, the quantity and/or the type of the food to be prepared can be changed in a subsequent recipe step in response to a state and/or environmental parameter determined in a previous recipe step

5. The kitchen appliance according to one of the preceding claims, **characterized in that** the input of food to be prepared, which must be carried out by a user, wherein, preferably, the kitchen appliance encompasses a display means, such as a display, and that the input of food to be prepared, which must be carried out by the user, can be displayed with regard to a type and/or a quantity of the food to be prepared.

6. The kitchen appliance according to one of claims 1 to 5, **characterized in that** an execution program includes an influence on a food to be prepared, which takes place by means of a predetermined first speed, wherein the kitchen appliance can maintain the first speed automatically by comparing it to the actual speed, and that the predetermined first speed can be changed, preferably decreased automatically to a predetermined second speed, wherein the kitchen appliance cannot maintain the second automatically, but that a monitoring of the actually reached speed is possible.

7. The kitchen appliance according to one of claims 1 to 5, **characterized in that** an execution program relates to a sequence of different speeds, maintained for a certain time period, that the kitchen appliance has a device for comparing the predetermined speed to an actual speed and, if applicable, for changing the actual speed to reach the predetermined speed, that a change of the actual speed with regard to the predetermined speed can also preferably not be carried out via the certain time period and that, if the speed was not changed, the actual speed, as compared to the predetermined speed, can be evaluated as measure for the viscosity of the food to be prepared.

8. The kitchen appliance according to one of the preceding claims, **characterized in that** the stirring mechanism can be turned off automatically in response to reaching a predetermined viscosity.

9. The kitchen appliance according to one of the preceding claims, **characterized in that** a food to be prepared, which is placed into the stirring vessel, can be measured with regard to its weight, that a measurement value obtained hereby or a value can be compared to an initial value, which is considered in the execution program, wherein the weight can be checked continuously or within certain time intervals respectively, and that the execution program can be ended automatically as a function of reaching a predetermined weight.

10. The kitchen appliance according to one of claims 1 to 9, **characterized in that** a temperature measurement with regard to the food to be cooked, if applicable the temperature of a hot plate, can be carried out continuously or within certain time intervals in the course of an execution program, and that the execution program can be ended automatically when a predetermined temporal increase of the temperature is reached.

11. A method for automatically preparing a dish in an electrically driven kitchen appliance comprising a heatable stirring vessel, which is embodied to accommodate a stirring mechanism, characterized in thatfood to be prepared, which is placed into the stirring vessel, is measured with regard to its state with regard to state parameters, such as a temperature and/or moisture of the food to be prepared, or that corresponding values can be input or that an environmental state is measured with regard to environmental parameters, such as an air pressure and/or humidity or that a corresponding value can be input, that a measurement value obtained hereby or input value is compared to an initial value, which is considered in an execution program, and that deviations from the initial value are used for adapting preparation parameters, such as heating time and/or heating temperature, which are included in the execution program.

12. The method according to claim 11, **characterized in that** the adaptation is made in consideration of the threshold values, which are inherent to the food to be prepared, and/or that a preparation of the food to be prepared is determined by means of an appliance part, which has a preparatory effect on the food to be prepared, and/or a sequence of movements, which also serves to determine the state parameter, is carried out by means of the appliance part.

13. The method according to claim 12, **characterized in that** the appliance part, which acts, is driven by an electric motor and that a characteristic motor number, such as speed and/or motor current of the electric motor is evaluated for determining the state parameter, wherein, more preferably, the appliance part is the stirring mechanism and the sequence of movements is reached by means of an automatic sequence of different speeds of the stirring mechanism.

14. The method according to one of claims 11 to 13, **characterized in that** for preparing the dish by means of executing a recipe according to individual recipe steps, which are to be carried out one after the other, wherein different quantities and/or types of food to be prepared must be put into the stirring vessel one after the other, the quantity and/or the type of the food to be prepared is changed in a subsequent recipe step in response to a state and/or environmental parameter determined in a previous recipe step,.

15. The method according to one of claims 11 to 14, **characterized in that** the input of food to be prepared is carried out by a user, wherein, preferably, the kitchen appliance encompasses a display means, such as a display, and that the input of food to be prepared, which must be carried out by the user, is displayed with regard to a type and/or a quantity of the food to be prepared.

## Revendications

1. Robot de cuisine électrique ayant une cuve de brassage conçue pour recevoir un agitateur et susceptible d'être chauffée, dans lequel le robot de cuisine est conçu pour la préparation automatique d'un mets selon un programme de traitement prédéterminé, **caractérisé en ce que** l'aliment à préparer placée dans la cuve de brassage est susceptible d'être mesurée en ce qui concerne son état par des capteurs prévus sur ou dans le robot de cuisine ou côté utilisateur par un instrument de mesure séparé et déterminé par rapport à une humidité en tant que paramètre d'état, ou qu'une valeur correspondante est susceptible d'être introduite, ou qu'un état de l'environnement est susceptible d'être mesuré par rapport à des paramètres d'état tels que l'humidité de l'air ou la pression de l'air, ou est susceptible d'être introduit en tant que valeur, qu'une valeur de mesure obtenue ou une valeur introduite de cette façon est susceptible d'être comparée à une valeur initiale prise en compte dans le programme de traitement, et que des écarts par rapport à la valeur initiale sont susceptibles d'être pris en compte par le biais d'une adaptation automatique de paramètres de préparation tels que la durée de chauffage et/ou la température de chauffage, qui sont contenus dans le programme de traitement.

2. Robot de cuisine selon la revendication 1, **caractérisé en ce que** l'adaptation est susceptible d'être opérée en prenant en compte une valeur limite intrinsèque de l'aliment à préparer, et/ou qu'un paramètre d'état est susceptible d'être déterminée par un élément de l'appareil agissant, lors de la préparation de l'aliment à préparer, sur celui-ci à des fins de préparation.

3. Robot de cuisine selon la revendication 2, **caractérisé en ce qu'**est susceptible d'être exécutée avec l'élément de l'appareil une séquence de mouvements servant aussi à la détermination du paramètre d'état, dans lequel, de préférence, l'élément de l'appareil qui agit sur l'aliment à préparer est entrainé par moteur électrique et une valeur caractéristique du moteur telle que la vitesse de rotation et/ou le courant du moteur est susceptible d'être évalué pour déterminer le paramètre d'état, et/ou l'élément de l'appareil est l'agitateur et la séquence de mouvements est obtenue par une séquence automatique de vitesses de rotation différentes.

4. Robot de cuisine selon l'une des revendications précédentes, **caractérisé en ce que** pour la préparation du mets au cours d'un traitement des étapes de recette à exécuter individuellement de manière successive en correspondance à une recette selon laquelle des quantités et/ou des types différents d'aliments sont à introduire dans la cuve de brassage, la quantité et/ou le type d'aliments est susceptible d'être modifié lors d'une étape de recette suivante en fonction d'un paramètre d'état et/ou d'environnement déterminé lors d'une étape de recette précédente.

5. Robot de cuisine selon l'une des revendications précédentes, **caractérisé en ce que** l'introduction d'aliments à préparer est à réaliser par un utilisateur, dans lequel, de préférence, le robot de cuisine comprend un moyen d'affichage tel qu'un écran et l'introduction d'aliments à réaliser par l'utilisateur en ce qui concerne le type et/ou la quantité d'aliments est susceptible d'être affiché.

6. Robot de cuisine selon l'une des revendications 1 à 5, **caractérisé en ce qu'**un programme de traitement contient une action à appliquer à un aliment à préparer avec une première vitesse de rotation prédéterminée, dans lequel la première vitesse de rotation est susceptible d'être maintenue automatiquement par le robot de cuisine par comparaison avec la vitesse de rotation réelle, et **en ce que** la première vitesse de rotation prédéterminée est susceptible d'être automatiquement modifiée, de préférence diminuée, à une deuxième vitesse de rotation, dans lequel la deuxième vitesse de rotation n'est pas susceptible d'être maintenue automatiquement, mais la vitesse de rotation effectivement atteinte peut être surveillée.

7. Robot de cuisine selon l'une des revendications 1 à 5, **caractérisé en ce qu'**un programme de traitement porte sur une séquence de vitesses de rotation différentes qui sont maintenues pendant une durée donnée, **en ce que** le robot de cuisine comprend un dispositif pour comparer la vitesse de rotation prédéterminée avec une vitesse de rotation réelle et le cas échéant modifier la vitesse de rotation réelle pour atteindre la vitesse de rotation prédéterminée, **en ce que** pour une ou plusieurs des vitesses de rotation prédéterminées, de préférence sur la durée donnée, aucune modification de la vitesse de rotation réelle par rapport à la vitesse de rotation prédéterminée n'est susceptible d'être réalisée et **en ce que**, en cas d'omission de la modification de la vitesse de rotation, la vitesse de rotation réelle en comparaison de la vitesse de rotation prédéterminée est susceptible d'être évaluée en tant que mesure de la viscosité de aliments à préparer.

8. Robot de cuisine selon l'une des revendications précédentes, **caractérisé en ce qu'**un arrêt automatique de l'agitateur est réalisable lorsqu'une viscosité prédéterminée est atteinte.

9. Robot de cuisine selon l'une des revendications précédentes, **caractérisé en ce que** l'aliment introduit dans la cuve de brassage est susceptible d'être mesuré en ce qui concerne son poids, **en ce que** la valeur de mesure ou valeur ainsi obtenue est susceptible d'être comparée avec une valeur initiale prise en compte dans le programme de traitement, dans lequel le poids est susceptible d'être contrôlé en continue ou à des intervalles temporels donnés et **en ce qu'**un arrêt automatique du programme de traitement est susceptible d'être exécuté en fonction de l'atteinte d'un poids prédéterminé.

10. Robot de cuisine selon l'une des revendications 1 à 9, **caractérisé en ce qu'**est réalisé continuellement ou à des intervalles temporels donnés au cours d'un programme de traitement, une mesure de température relative à l'aliment à cuire, le cas échéant la température d'une plaque chauffante, et **en ce qu'**un arrêt automatique du programme de traitement est susceptible d'être exécuté lorsqu'est atteint une augmentation temporelle prédéterminée de la température.

11. Procédé de préparation automatique de nourriture dans un robot de cuisine à moteur électrique ayant une cuve de brassage conçue pour recevoir un agitateur et susceptible d'être chauffée, **caractérisé en ce que** l'aliment à préparer introduit dans la cuve de brassage est mesuré en ce qui concerne son état par rapport à des paramètres d'état tels qu'une température et/ou une humidité de l'aliment à préparer, ou des valeurs correspondantes sont susceptibles d'être introduites ou **en ce qu'**est mesuré un état de l'environnement par rapport à des paramètres d'environnement tels que la pression de l'air et/ou l'humidité de l'air, ou une valeur correspondante est susceptible d'être introduite, **en ce qu'**une valeur de mesure obtenue ou une valeur introduite de cette façon est comparée à une valeur initiale prise en compte dans le programme de traitement, et **en ce que** des écarts par rapport à la valeur initiale sont utilisés pour adapter des paramètres de préparation, tels que la durée de chauffage et/ou la température de chauffage, qui sont contenus dans le programme de traitement.

12. Procédé selon la revendication 11, **caractérisé en ce que** l'adaptation est opérée en prenant en compte une valeur limite intrinsèque de l'aliment à préparer, et/ou qu'une préparation de l'aliment à préparer est déterminée par le biais d'un élément de l'appareil agissant sur celui-ci à des fins de préparation, et/ou qu'une séquence de mouvements est exécuté avec l'élément de l'appareil servant également à la détermination du paramètre d'état.

13. Procédé selon la revendication 12, **caractérisé en ce que** l'élément de l'appareil qui agit sur l'aliment à préparer est entrainé par moteur électrique et une valeur caractéristique du moteur telle que la vitesse de rotation et/ou le courant du moteur, est évaluée pour déterminer le paramètre d'état, dans lequel, de préférence, l'élément de l'appareil est l'agitateur et que la séquence de mouvements est obtenue par une séquence automatique de vitesses de rotation différentes de l'agitateur.

14. Procédé selon l'une des revendications 11 à 13, **caractérisé en ce que** pour la préparation du mets au cours d'un traitement des étapes de recette à exécuter individuellement de manière successive en correspondance à une recette selon laquelle des quantités et/ou des types différents d'aliments sont à introduire dans la cuve de brassage, la quantité et/ou le type d'aliment est susceptible d'être modifié lors d'une étape de recette suivante en fonction d'un paramètre d'état et/ou d'environnement déterminé lors d'une étape de recette précédente.

15. Procédé selon l'une des revendications 11 à 14, **caractérisé en ce que** l'introduction d'aliments est réalisée par un utilisateur, dans lequel, de préférence, le robot de cuisine comprend un moyen d'affichage tel qu'un écran et l'introduction d'aliment à réaliser par l'utilisateur en ce qui concerne le type et/ou la quantité d'aliment est affichée.
